# EUROPEAN PATENT APPLICATION

(11) **EP 3 300 376 A1**
(43) Date of publication of application: **28.03.2018**
(21) Application number: 16813582.0
(22) Date of filing: 26.04.2016
(51) Int. Cl.: H04N 21/262, H04N 21/472, H04N 21/437

(54) **METHOD AND APPARATUS FOR PROCESSING IPTV PROGRAM, AND IPTV SYSTEM**

(30) Priority: 24.06.2015 CN 201510355441
(71) Applicant: ZTE Corporation, Shenzhen, Guangdong 518057 (CN)
(72) Inventor: LIU, Jianing, Shenzhen Guangdong 518057 (CN)
(74) Representative: HGF Limited
(86) International application number: PCT/CN2016/080266
(87) International publication number: WO 2016/206466

(57) **Abstract**

A method for processing Internet Protocol Television (IPTV) program includes that: after a replay request for a specified program is received, it is determined that the specified program is not successfully recorded; and whether a starting time of the specified program is within a specified time shift range is judged, and when it is within the specified time shift range, a time shift play interface is called to play the specified program.

## Description

### Technical Field

The present invention relates to, but not limited to, the technical field of networks, and particularly to a method and apparatus for processing Internet Protocol Television (IPTV) program, and an IPTV system.

### Background

Due to continuous scale expansion of a single-local point system of IPTV, the number of Electronic Program Guide (EPG) servers in a system network is continuously increased. For example, there have been a thousand servers at a local point. Compared with a conventional television, an IPTV system has a more powerful "replay" function. A program that has been played can be watched anytime, a state of the program needs to be modified along with time changes, a data synchronization amount is relatively larger, and moreover, a current manner has a relatively longer delay, so that a user experience has a common effect.

Under a normal condition, 15-25 minutes are usually needed from completion of program play to the time that a program guide state is displayed as a "playable state", and the time is respectively consumed as follows:
regular reporting of a Content Delivery Network (CDN) system after successful recording needs a certain waiting time, which is usually 15 minutes;
an EPG system receives a state updating record of the CDN system, and a Connection Point (CP) regularly generates incrementally synchronized data, which usually needs 5 minutes;
the incrementally synchronized data is synchronized to the EPG system, which usually requires 5 minutes; and

EPG data loading needs relatively less time which may be ignored.

Based on the above condition, there is an urgent need to provide an efficient and rapid method to improve a user experience.

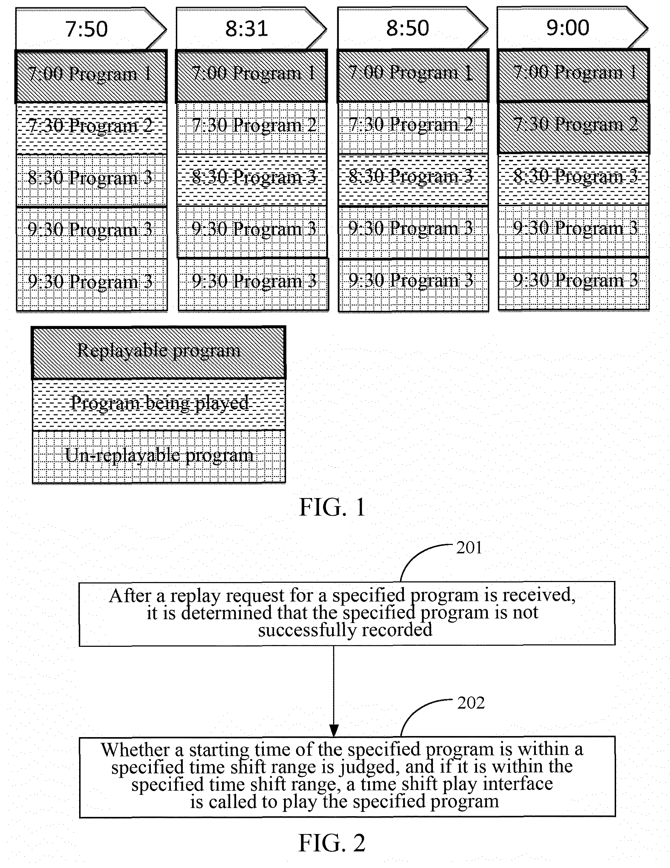

As shown in FIG. 1, a program 2 has ended at 8:30, but still cannot be replayed at 8:50 in a program guide (reasons have been described above), and can be replayed till 9:00 only, so that a user experience effect is poor.

### Summary

The below is a summary of a subject described in detail in the present invention, and the summary is not intended to limit the protection scope of the claims.

The present invention provides a method and apparatus for processing IPTV program and an IPTV system, so as to reduce a replay delay of a program that has been played.

An embodiment of the present invention provides a method for processing IPTV program, which includes that:
after a replay request for a specified program is received, it is determined that the specified program is not successfully recorded; and
whether a starting time of the specified program is within a specified time shift range is judged, and when it is within the specified time shift range, a time shift play interface is called to play the specified program.

In an examplary embodiment, the method further includes that:
after the specified program is completely played, a state of the specified program is set to be a replayable state.

In an examplary embodiment, the specified program is a program that has been completely played or a program that is being played.

Embodiments of the present invention further provide a computer-readable storage medium, which stores computer-executable instructions, when being executed, the computer-executable instructions are to implement the abovementioned method for processing IPTV program.

An embodiment of the present invention further provides an apparatus for processing IPTV program, which includes:
a determination module, configured to, after a replay request for a specified program is received, determine that the specified program is not successfully recorded; and
a play module, configured to judge whether a starting time of the specified program is within a specified time shift range, and when it is within the specified time shift range, call a time shift play interface to play the specified program.

In an examplary embodiment, the apparatus further includes:
a setting module, configured to, after the specified program is completely played, set a state of the specified program to be a replayable state.

In an examplary embodiment, the specified program is a program that has been completely played or a program that is being played.

An embodiment of the present invention further provides an IPTV system, which includes the abovementioned apparatus for processing IPTV program.

From the above, the embodiments of the present invention provide the method and apparatus for processing IPTV program and the IPTV system, which may reduce a replay delay of a program that has been played and improve a user experience.

After the drawings and the detailed descriptions are read and understood, the other aspects may be understood.

### Brief Description of Drawings

FIG. 1 is a schematic diagram of an IPTV program guide according to a related technology.
FIG. 2 is a flowchart of a method for processing IPTV program according to an embodiment of the present invention.
FIG. 3 is a flowchart of another method for processing IPTV program according to an embodiment of the present invention.
FIG. 4 is a schematic diagram of an IPTV program guide according to an embodiment of the present invention.
FIG. 5 is a schematic diagram of an apparatus for processing IPTV program according to an embodiment of the present invention.

### Detailed Description

Embodiments of the present invention will be described below in combination with the drawings. It is important to note that embodiments in the application and various modes in the embodiments may be combined without conflicts.

FIG. 2 is a flowchart of a method for processing IPTV program according to an embodiment of the present invention. As shown in FIG. 2, the method of the embodiment includes the following steps.

In Step 201, after a replay request for a specified program is received, it is determined that the specified program is not successfully recorded.

In Step 202, whether a starting time of the specified program is within a specified time shift range is judged, and if it is within the specified time shift range, a time shift play interface is called to play the specified program.

The method can be applied for an IPTV system.

In the embodiment, a replay delay of a program that has been played can be reduced, and a user experience can be improved.

In the embodiment, the method further includes that:
after the program is completely played, a state of the program is set to be a replayable state.

In the embodiment, the specified program may be a program that has been completely played or a program that is being played.

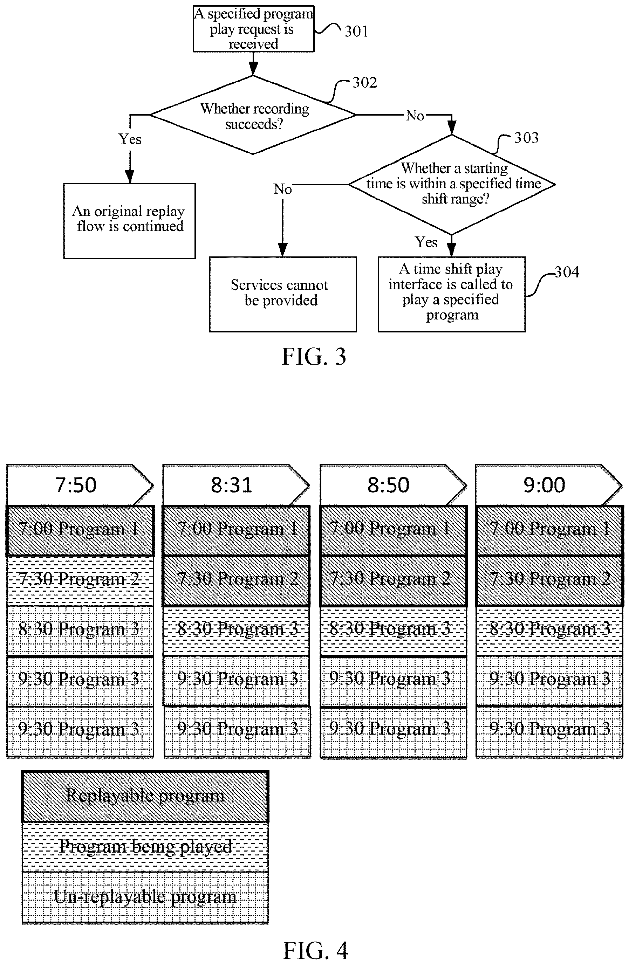

FIG. 3 is a flowchart of another method for processing IPTV program according to an embodiment of the present invention. As shown in FIG. 3, the method of the embodiment includes the following steps.

In Step 301, a user enters a replay interface, and initiates a specified program paly request for requesting to replay a specified program, and an IPTV system receives the specified program play request.

In Step 302, the IPTV system checks a recording state of the specified program, judges whether the recording state is a "successful recording" state or a "unsuccessful recording" state, continues according to an original replay flow if it is the "successful recording" state, and if it is the "unsuccessful recording" state, the flow turns to Step 303.

In Step 303, whether a starting time of the specified program is within a specified time shift range is judged, Step 304 is executed if it is within the specified time shift range, and if it is not within the time shift range, services cannot be provided for the user.

In Step 304, a time shift play interface is called to play the specified program to provide play service for the user.

The embodiment may have the following precondition: a channel supports time shift.

In an implementation mode, a configuration of each local point may be that: a time shift duration is 4 hours. According to an original manner, about 25 minutes are usually needed from the completion of program play to entering of a "playable state", a maximum duration of a program usually does not exceed 2 hours, and the time shift duration is usually 4 hours, therefore the program replay within 4 hours may completely be implemented by virtue of a time shift play capability. The recording state usually delays for 25 minutes, thus there exists no empty area.

A program guide in the embodiment is displayed not by taking a practical state as a standard but by taking a time axis as the standard. As shown in FIG. 4, that is:
the state of the program is displayed to be "replayable" immediately after the program is completely played;
the state of a program that is being played is displayed to be "now playing"; and
the state of a program to be played is displayed to be "un-replayable".

A program influenced in the embodiment of the present invention may be: a program that has been completely played, or a program that is being played.

For example, the time shift range in the embodiment is 4 hours, the user wants a program 2 to be replayed at 8:50, and a starting time of the program 2 is 7:30, and it is within the time shift range, thus the time shift play interface can be called to play the program 2.

An embodiment of the present invention further provides a computer-readable storage medium, which stores computer-executable instructions, the computer-executable instructions are executed to implement the abovementioned method for processing IPTV program.

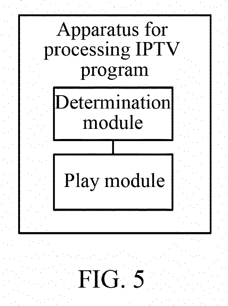

FIG. 5 is a schematic diagram of an apparatus for processing IPTV program according to an embodiment of the present invention. As shown in FIG. 5, the apparatus of the embodiment includes:
a determination module, configured to, after a replay request for a specified program is received, determine that the specified program is not successfully recorded; and
a play module, configured to judge whether a starting time of the specified program is within a specified time shift range, and when it is within the specified time shift range, call a time shift play interface to play the specified program.

In an examplary embodiment, the apparatus may further include:
a setting module, configured to, after the specified program is completely played, set a state of the specified program to be a replayable state, herein the specified program may be a program that has been completely played or a program that is being played.

An embodiment of the present invention further provides an IPTV system, which includes the abovementioned apparatus for processing IPTV program.

Those skilled in the art should know that all or part of the steps of the abovementioned embodiment may be implemented by a flow of a computer program, the computer program may be stored in a computer-readable storage medium, the computer program is executed on a corresponding hardware platform (for example, a system, equipment, a device, an apparatus and a processor), and during execution, one or combination of the steps of the method embodiment is included.

All or part of the steps of the abovementioned embodiment may also be implemented by virtue of an integrated circuit, these steps may be made into individual integrated circuit modules respectively, or multiple modules or steps therein may be made into a single integrated circuit module for implementation.

Apparatus/function modules/function units in the abovementioned embodiments may be implemented by adopting a universal computing device, and they may be concentrated on a single computing device, and may also be distributed on a network formed by multiple computing devices.

When being implemented in form of software function module and sold or used as an independent product, apparatus/function modules/function units in the abovementioned embodiments may be stored in a computer-readable storage medium. The abovementioned computer-readable storage medium may be a read-only memory, a magnetic disk, an optical disk or the like.

### Industrial Applicability

The embodiments of the present invention provide a method and apparatus for processing IPTV program, and an IPTV system, which may reduce a replay delay of a program that has been played and improve a user experience.

## Claims

1. A method for processing Internet Protocol Television, IPTV, program, comprising:
after a replay request for a specified program is received, determining that the specified program is not successfully recorded; and
judging whether a starting time of the specified program is within a specified time shift range, and when the starting time of the specified program is within the specified time shift range, calling a time shift play interface to play the specified program.

2. The method according to claim 1, further comprising:
after the specified program is completely played, setting a state of the specified program to be a replayable state.

3. The method according to claim 1 or 2, wherein
the specified program is a program that has been completely played or a program that is being played.

4. An apparatus for processing Internet Protocol Television, IPTV, program, comprising:
a determination module, configured to, after a replay request for a specified program is received, determine that the specified program is not successfully recorded; and
a play module, configured to judge whether a starting time of the specified program is within a specified time shift range, and when the starting time of the specified program is within the specified time shift range, call a time shift play interface to play the specified program.

5. The apparatus according to claim 4, further comprising:
a setting module, configured to, after the specified program is completely played, set a state of the specified program to be a replayable state.

6. The apparatus according to claim 4 or 5, wherein
the specified program is a program that has been completely played or a program that is being played.

7. An Internet Protocol Television, IPTV, system, comprising the apparatus for processing IPTV program according to any one of claims 4-6.
